**Europäisches Patentamt**

**European Patent Office**

**Office européen des brevets**

(19)

(11) Veröffentlichungsnummer: **0 182 014**
**B1**

(12)

# EUROPÄISCHE PATENTSCHRIFT

(45) Veröffentlichungstag der Patentschrift:
**22.03.89**

(51) Int. Cl.⁴: **C 25 C 3/12, C 04 B 35/52,**
**B 30 B 11/22 // B30B15/14**

(21) Anmeldenummer: **85110600.5**

(22) Anmeldetag: **23.08.85**

(54) **Verfahren zur kontinuierlichen Aufbereitung von Elektrodenmaterial und Einrichtung zur Ausübung des Verfahrens.**

(30) Priorität: **30.08.84 DE 3431897**

(43) Veröffentlichungstag der Anmeldung:
**28.05.86 Patentblatt 86/22**

(45) Bekanntmachung des Hinweises auf die Patenterteilung:
**22.03.89 Patentblatt 89/12**

(84) Benannte Vertragsstaaten:
**AT CH FR GB IT LI NL SE**

(56) Entgegenhaltungen:
**DE-A- 2 654 470**
**DE-A- 3 013 294**
**GB-A- 1 147 031**
**GB-A- 2 009 972**

(73) Patentinhaber: **BUSS AG, Lautengartenstrasse 7,**
**CH-4052 Basel (CH)**

(72) Erfinder: **Chevroulet, Léon, Auf Käppelimatt 19,**
**CH-4133 Pratteln (CH)**
Erfinder: **Salmon, Guy, Sonnenweg 23, CH-4133 Pratteln**
**(CH)**

(74) Vertreter: **Rottmann, Richard, Rottmann Patentanwälte**
**AG Dufourstrasse 101, CH-8034 Zürich (CH)**

## Beschreibung

Die vorliegende Erfindung bezieht sich auf ein Verfahren zur kontinuierlichen Aufbereitung von Elektrodenmaterial, bei welchem Pech, Koksstaub und Koksschüttgut verschiedenster Körnung durch Mischen und Kneten zu einer pastösen bzw. breiigen Masse verbunden und unter Wärmezufuhr zu einem Kohlegebilde geformt werden, wobei die Misch- und Knetbehandlung und der formgebende Austrag getrennt erfolgen. Ferner bezieht sich die Erfindung auf eine Vorrichtung zur Durchführung des Verfahrens.

Das Verfahren eignet sich insbesondere zur Herstellung von Elektrodenmasse für die Aluminiumindustrie, welche Elektrodenmasse am elektrochemischen Vorgang der Aluminiumgewinnung teilnimmt und in sehr grossen Mengen benötigt wird. Für jedes Kilo Aluminium wird ungefähr ein halbes Kilo in Form von Anodenmasse im Söderbergofen verbraucht. Die Söderbergöfen sind mit einer kontinuierlichen Anode ausgerüstet, welche periodisch mit ungebrannten Elektrodenbriketts beschickt wird. Dabei ist die Herstellung der Grundmasse für die Bildung der Elektroden in richtiger Kornzusammensetzung besonders wichtig. Aus Petrolkoks, welcher vorgebrochen, wenn nötig getrocknet, gemahlen, gesiebt und gesichtet wird, entstehen verschiedene, nach der Körnung klassierte Koksfraktionen, welche mit Steinkohlenteerpech vermischt werden, Pech wirkt als Bindemittel und hat die Aufgabe, die Kokskörner einzuhüllen und sie miteinander zu einer pastösen bzw. breiigen Masse zu verbinden. Die so bearbeitete gemischte und geknetete Masse wird am Ende des Misch- und Knetprozesses verformt, so dass Blöcke gegossen oder Briketts gebildet werden können. Die brikettierte Masse gelangt dann direkt in die kontinuierlichen Anoden der Söderbergelektrolyseöfen.

Es wurde bereits vorgeschlagen, die Aufbereitung des Elektrodenmaterials nicht mehr im klassischen diskontinuierlich arbeitenden Doppelmuldenmischer durchzuführen, sondern dazu eine kontinuierlich arbeitende Misch- und Knetvorrichtung zu verwenden, welche eine rotierende und gleichzeitig hin- und hergehende Knetschnecke aufweist. Wichtig ist dabei, dass die Betriebsbedingungen der Vorrichtung konstant gehalten werden. Nur so wird ein gleichmässiges Produkt erzeugt. Die Druckverhältnisse in Misch- und Knetvorrichtung sind durch den zur Verfügung stehenden Austrittsquerschnitt am Austritt der Vorrichtung bestimmt. Zur Änderung der Druckverhältnisse werden Düsen und bewegliche Klappen verwendet, deren Verstellung meistens manuell durch das Bedienungspersonal erfolgt. Eine motorische verstellbare Austrittsdüse, welche in Abhängigkeit des Druckes im Misch- und Knetgehäuse reagiert, ist ebenfalls bekannt geworden. Durch die Änderung des Düsenquerschnittes am Ende des Misch- und Knetgehäuses wird aber die Formgebung der fertig gekneteten Masse ungünstig beeinflusst. Bekannt ist auf diesem Gebiete das Verfahren und die entsprechende Vorrichtung zum Mischen und Kühlen von Elektrodenmasse nach der DE-A-3 013 294, die ein örtlich getrenntes Mischen und Kneten einerseits und Formgeben andrerseits für die Elektrodenmaterialherstellung vorsieht.

Zweck der Erfindung ist es nun ein einfaches Verfahren für den kontinuierlichen Betrieb vorzuschlagen, bei welchem die Formgebung der aufbereiteten Masse so erfolgt, dass der Misch- und Knetprozess nicht mehr beeinflusst wird und welches einen störungsfreien Betrieb ermöglicht. Das erfindungsgemäss vorgeschlagene Verfahren weist zu diesem Zwecke die im unabhängigen Anspruch 1 aufgeführten Merkmale auf.

In dieser Weise wird die Formgebung vom Misch- und Knetprozess entkoppelt, wodurch eine Durchsatzsteigerung im Misch- und Knetteil ermöglicht wird. Dies führt zu erhöhter Wirtschaftlichkeit und gibt die Möglichkeit, eine grössere Anzahl kleiner Stränge aus der aufbereiteten Misch- und Knetmasse zu formen, welche zur Herstellung von jedem beliebigen Profil geeignet sind. Dies kommt insbesondere bei der Herstellung von Söderbergmasse zur Geltung, welche 24 bis 40% Bindemittelanteil (Pech) aufweist, wobei die Masse zu kleinstückigen Briketts geformt werden soll. Aus Wirtschaftlichkeitsaspekten und Umweltschutzerwägungen geht der Trend zur Reduzierung der Bindemittel. Damit wird aber die Viskosität der fertigen Masse höher und die Verformung schwieriger. Durch die Trennung des formgebenden Austrags vom Misch- und Knetprozess wird ermöglicht, mehrwellige Extruder zu gebrauchen, welche die Verformung wesentlich vereinfachen.

Die Vorrichtung zur Durchführung des vorgeschlagenen Verfahrens weist die im unabhängigen Anspruch 2 aufgeführten Merkmale auf.

Ein Ausführungsbeispiel der vorgeschlagenen Vorrichtung ist auf beiliegender Zeichnung dargestellt und zwar zeigen

Fig. 1 eine schematische Darstellung einer Gesamtanlage;

Fig. 2 eine Gesamtansicht der formgebenden Austragsvorrichtung in Seitenansicht; und

Fig. 3 einen Horizontalschnitt durch die Austragsvorrichtung.

Die zur Durchführung des vorgeschlagenen Verfahrens geeignete Anlage weist eine kontinuierlich arbeitende Misch- und Kneteinrichtung 1 auf, welche eine Schneckenwelle 2 besitzt, die im Gehäuse 3 der Misch- und Kneteinrichtung drehbar und gleichzeitig hin- und herbewegbar angeordnet ist. Die Schneckenwelle 2 ist mit Misch- und Knetflügeln 4 ausgerüstet, welche mit an der Gehäuseinnenwand radial nach innen abstehenden Knetorganen 5 zusammenwirken. In dieser kontinuierlich arbeitenden Misch- und Kneteinrichtung wird zur Herstellung von Pasten für Söderbergelektroden Koksstaub und Kornfraktionen mit Pech intensiv durchgeknetet, so dass die Kornfraktionen vom Bindemittel umhüllt werden. Die Kornfraktionen werden in separaten Silos gelagert und dem Gehäuse 3 durch eine Einfüllöffnung 6 dosiert zugeführt. Die Zugabe von Pech erfolgt in fester oder flüssiger Form durch die gleiche Öffnung oder durch in den Knetraum eingebaute Einspritzdüsen.

An der Austrittsseite der Misch- und Kneteinrichtung 1 ist ein vertikaler Fallschacht 7 vorgesehen, welcher am unteren Ende in das Gehäuse 8 eines nur rein schematisch dargestellten Extruders 9 mündet. Im Fallschacht 7 ist eine Auswurfmündung 10 vorgesehen; welcher eine Weiche in der Form einer Auswurfklappe 11 zugeordnet ist, die in der Normalstellung die Verbindung der Auswurfmündung 10 zum Inneren des Fallschachtes 7 verschliesst und einen Teil der inneren Wandung des Fallschachtes 7 bildet, während in der strichpunktiert gezeichneten Lage der Auswurfklappe 11 die genannte Auswurfmündung 10 freigegeben und der untere Teil des Fallschachtes 7 verschlossen wird. Zur Verstellung der Auswurfklappe 11 ist ein Verstellmotor 38 vorhanden, welcher über ein Steuerorgan 39 betätigbar ist.

Am oberen Ende des Fallschachtes 7 ist ein Stutzen 12 vorhanden, an welchem über eine Absaugleitung 14 eine Dampfabsaugung 13 angeschlossen ist.

Die automatische Verstellung der Auswurfklappe 11 im Fallschacht 7 durch den Verstellmotor 38 in die Auswurfposition erfolgt einerseits bei Überschreiten eines vorgegebenen Solldrehmomentes an der Schneckenwelle 2 der kontinuierlichen Misch- und Kneteinrichtung 1 als auch in Verbindung mit der Extruderüberwachung. Der von einem Motor 16 angetriebene Extruder 9 ist mehrweilig ausgebildet und weist kämmende, gleich oder gegenläufig rotierende Schnecken auf, wobei die Drehzahl der Extruderwellen in Abhängigkeit vom Niveau des Materials im Fallschacht 7 gesteuert wird. Zu diesem Zweck ist im Fallschacht 7 ein Überwachungsorgan in der Form eines Niveaumessgerätes 17 vorhanden, welches das Niveau des aus der Misch- und Kneteinrichtung 1 gelieferten Materials laufend misst und den zum Antrieb des Extruders 9 dienenden Motor 16 entsprechend beeinflusst. Ferner ist auf der Welle des Extruders 9 ein Überwachungsorgan in der Form eines Messgerätes 37' vorhanden, welches die Antriebsleistung und/oder das Drehmoment und/oder den Druck im Extruder misst. Die Messwerte gelangen in das Steuerorgan 39. Dieses beeinflusst den Verstellmotor 38 der Auswurfklappe und/oder den Antriebsmotor 16 des Extruders 9. Hinter dem Extruder 9 ist der Austrittsdüse 24 ein Kühlbad 43 nachgeschaltet, in welchem ein erstes Förderband 44 und gegenüber diesem etwas versetzt, ein zweites Förderband 45 angeordnet ist. Das erste Förderband 44 ist ein Gummiförderband, auf welchem die aus der Düse 24 tretenden Formstücke gekühlt werden. Diese sind noch nicht formbeständig und brauchen eine Unterlage, welche durch das Gummiband des Förderbandes 44 gebildet wird. Auf diesem Gummi- oder Stahlband werden die Stränge durch ein Querschneidewerk 44a zu Briketts geschnitten. Anschliessend gelangen die Formstücke auf das zweite Förderband 45, welches Ausnehmungen aufweist und als Gitterband ausgebildet ist. Diese Ausbildung ermöglicht, dass die etwas formgeständigen Formstücke auch von unten her gekühlt werden. Die sonst notwendige Kühlstrecke zur vollständigen Kühlung kann erheblich kürzer gehalten werden.

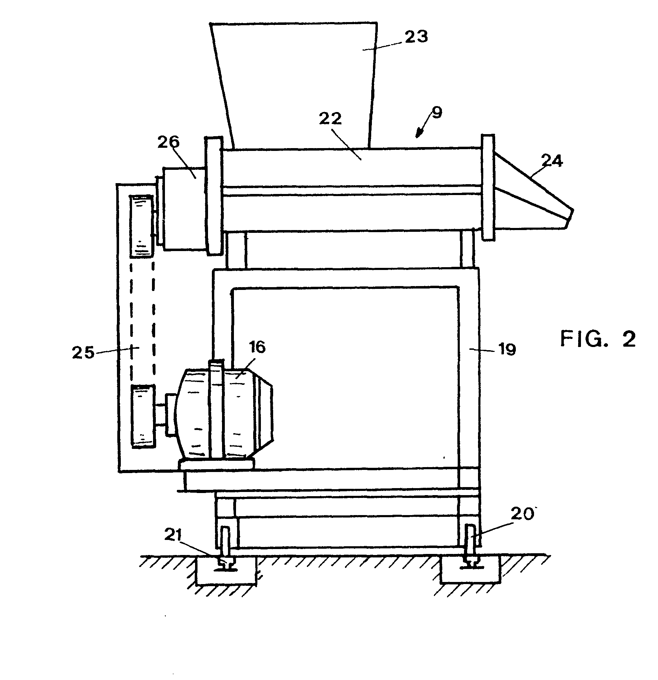

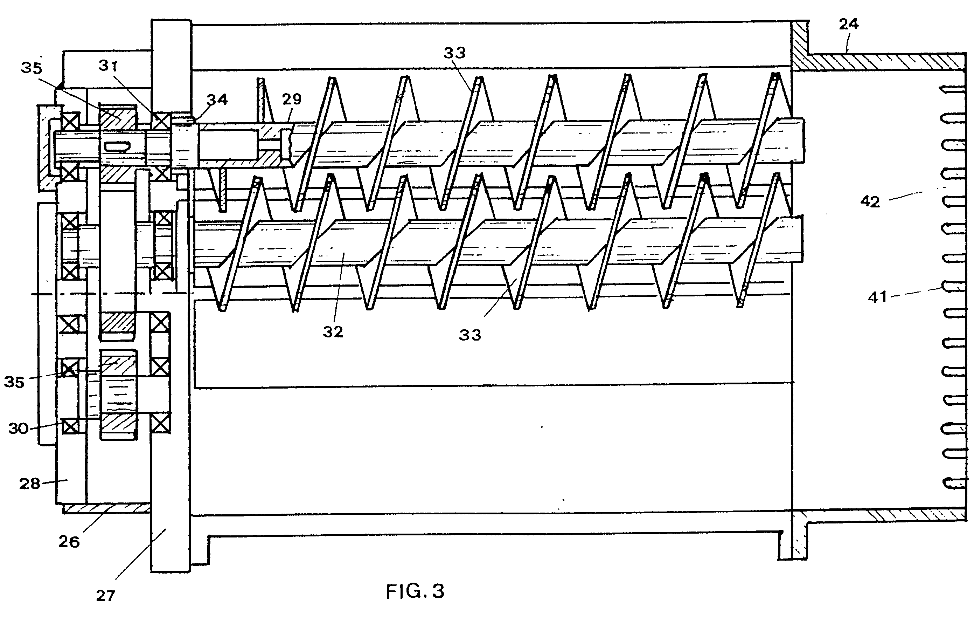

Die nähere Ausbildung des Extruders ist aus den Fig. 2 und 3 ersichtlich. Der Extruder 9 weist ein Chassis 19 auf, welches mit Rädern 20 ausgerüstet und auf den Schienen 21 verfahrbar ist. Auf dem Chassis 19 ruht das Gehäuse 22 des Extruders 9, welches Gehäuse 22 zweckmässigerweise in der Horizontalebene zweiteilig ausgebildet und aufklappbar ist. Das Oberteil des Gehäuses 22 ist mit einem Einfüllstutzen 23 versehen und die eine Stirnseite des Gehäuses 22 trägt eine Austrittsdüse 24, welche verstellbar ausgebildet sein kann.

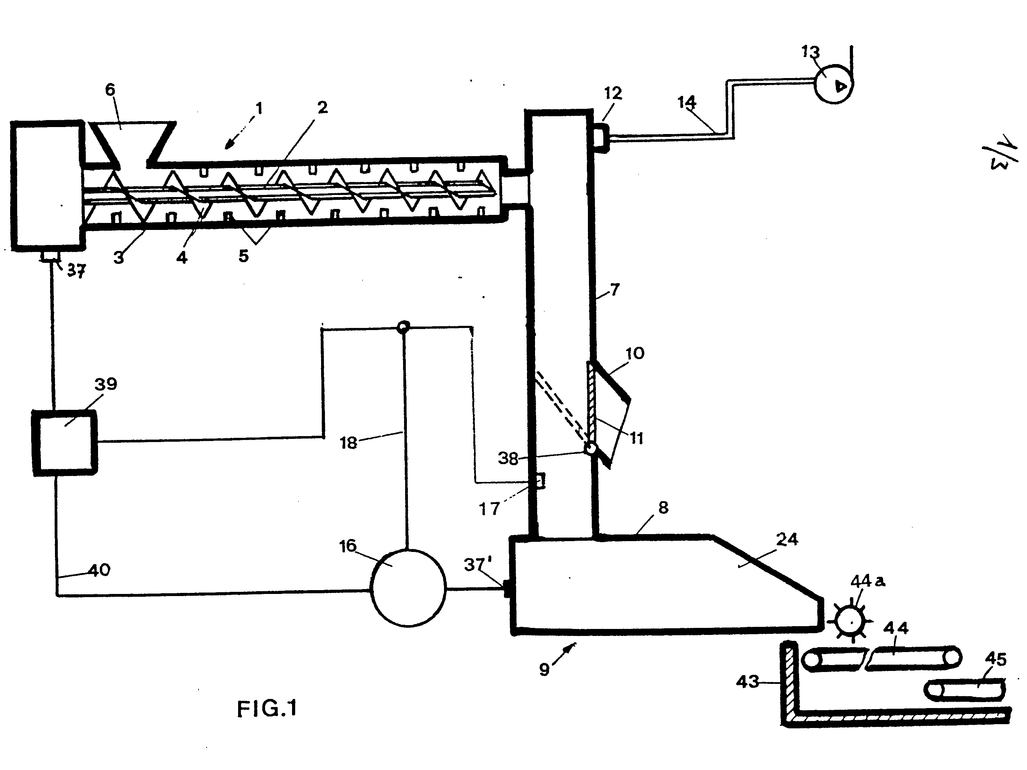

Der in Fig. 1 mit 16 bezeichnete Motor ist im Chassis 19 untergebracht und steht über einen Keilriemenantrieb 25 oder mittels Kupplung direkt mit dem Getriebe des Extruders 9 in Verbindung, welches Getriebe im Gehäuseteil 26 am der Austrittsdüse 24 abgekehrten Ende des Gehäuses 22 angeordnet ist.

Wie ferner aus der Fig. 3 hervorgeht, weist das Gehäuse 22 am Ende eine wegnehmbare Stirnwand 27 auf, welche den Gehäuseteil 26 trägt, in welchem das Getriebe untergebracht ist. Der Gehäuseteil 26 ist mit einer weiteren Stirnwand 28 versehen.

Im Gehäuse 22 des Extruders 9 sind vier Extruderwellen 29 untergebracht, die in der horizontalen Mittelebene des Gehäuses 22 nebeneinander angeordnet und einseitig in den Stirnwänden 27 und 28 gelagert sind. Die entsprechenden Lager sind mit 30 bzw. 31 bezeichnet. Mit den Wellen 29 sind Hohlwellen 32 verbunden, welche mit Schneckengängen 33 ausgerüstet sind, die miteinander in Eingriff stehen. Die Hohlwellen 32 sind mittels einer Steckverbindung mit dem zugehörigen Wellenstumpf verbunden, wobei zur Sicherung Kerbstifte und Bolzen vorgesehen sind. Ein Austreten des Mischgutes entlang der Wellen wird durch Labyrinthdichtungen 34 verhindert. Im Gehäuseteil 26 sind ferner Zahnräder 35 angeordnet, die zusammen das Antriebsgetriebe bilden und mit dem Motor 16 in Verbindung stehen.

Das andere, der Stirnwand 27 abgekehrte Ende des Gehäuses 22 ist offen und trägt die Austrittsdüse 24, wobei die Hohlwellen 32 mit den Schneckengängen 33 bis zur inneren Mündung der Austrittsdüse 24 sich erstrecken. Die Formgebungselemente 41 der zweckmässigerweise zweiteilig ausgebildeten Düse sind entweder am Düsenoberteil oder am Unterteil angegossen oder als Balken ausgebildet, welche mit dem Düsenober- bzw. -unterteil verschraubt sind. Es werden in der Düse 24 Stränge gebildet, wobei die Anzahl der Stränge durch konstruktive Massnahmen bestimmt werden kann. Es können bis zu 50 Stränge gebildet werden, wobei jedoch vorzugsweise Düsen gebraucht werden, die Formkanäle für vier bis dreissig Stränge aufweisen. Ein Teil der Formkanäle 42, welche je nach gewünschter Strangform im Querschnitt viereckig, rund oder oval ausgebildet sein können, sind zweckmässigerweise verschliessbar ausgebildet, wobei zum Verschliessen Schieber oder Schliessdorne Anwendung finden können. Die Betätigung der Schieber kann mechanisch, pneumatisch, hydraulisch oder elektrisch erfolgen. Der Oberteil der Düse 24 ist aufklappbar ausgebildet, wobei das Aufklappen manuell oder automatisch, z.B. mit Hilfe einer Ventilsteuerung erfolgen kann, welche entweder das Auftreten von Überdruck im Innern der Düse 24 anzeigt und Alarm auslöst oder direkt einen Öffnungsmechanismus betätigt.

Eine andere Möglichkeit besteht darin, indem das Niveaumessgerät 17 im Fallschacht 7 zur Betätigung eines Öffnungs- und Schliessmechanismus für die Austrittsdüse 24 verwendet wird. Gleichzeitig kann eine optische Anzeige oder eine Alarmvorrichtung betätigt werden, welche eine Störung im Verarbeitungsprozess anzeigt.

Bei der beschriebenen Vorrichtung erfolgt die Formgebung nicht mehr in der Misch- und Kneteinrichtung, sondern örtlich getrennt im Extruder. Der Misch- und Knetprozess wird von der Formgebung entkoppelt, wodurch der Durchsatz im Knetteil wesentlich gesteigert und die Wirtschaftlichkeit erhöht werden. Es besteht ferner die Möglichkeit, gleichzeitig eine grössere Anzahl kleinere Stränge zu extrudieren, wobei Profile mit beliebigem Querschnitt hergestellt werden können. Für die Söderbergmasse sind gleichstückige Briketts erwünscht, in welchen durch Einsatz des mehrwelligen Extruders das Bindemittel stark reduziert werden kann. Trotz höherer Viskosität und schwierigerer Verformung kann die Bearbeitung im mehrwelligen Extruder ohne Schwierigkeiten erfolgen.

Die Auswurfklappe 11 im Fallschacht bildet eine Weiche und wird zunächst beim Anfahren des Prozesses in die Auswurfstellung gebracht. Anschliessend wird die Klappe 11 umgestellt, so dass die Auswurfmündung 10 verschlossen bleibt. Es ist nun möglich, eine zusätzliche Sicherheitseinrichtung einzubauen, welche die Klappe 11 betätigt, falls die Drehmomentaufnahme in der Misch- und Kneteinrichtung die zulässige Grenze überschreitet. In diesem Falle wird an der Welle 2 der Misch- und Kneteinrichtung ein Drehmomentmessgerät 37 angeordnet, welches mit dem Verstellmotor 38 für die Auswurfklappe 11 über ein Steuerorgan 39 in Verbindung steht. Tritt eine unzulässige Rezepturabweichung infolge zufälliger Überdosis an Koksstaub oder ungewollter Abnahme oder Ausfall der Pechzufuhr ein, erhöht sich die Viskosität der Knetmasse und damit das Drehmoment der Knetwelle in der Misch- und Knetvorrichtung. Das Drehmomentmessgerät 37 erfasst die unzulässige Erhöhung und bewirkt über das Steuerorgan 39 das unter Umständen verzögerte Öffnen der Klappe 11, wodurch das nicht rezepturkonforme Material aus dem Prozess ausgeschleust wird.

Auch die Überwachung der Hohlwellen 32 des Extruders kann mit der Betätigung der Auswurfklappe 11 kombiniert werden. In diesem Falle erfolgt eine zusätzliche Beeinflussung des Antriebsmotors 16 durch das Steuerorgan 39, welche durch eine Verbindung 40 mit diesem Motor 16 in Verbindung steht.

Die Drehzahl der Hohlwellen 32 wird mit Hilfe des Niveaumessgerätes 17 derart gesteuert, dass bei Erreichung eines vorgegebenen Materialniveaus im Fallschacht 7 die Drehzahl über den Motor 16 gesteigert und damit die Austragsleistung des Extruders erhöht wird. Beim sinkenden Materialniveau erfolgt eine Drosselung der Leistung. Die Drehzahl der Extruderwellen wird am Getriebeeingang überwacht.

Es sei noch erwähnt, dass das Gehäuse 22 zweckmässigerweise doppelwandig ausgebildet ist, wobei das Gehäuseinnere geheizt oder gekühlt werden kann. Dabei kann es vorteilhaft sein, wenn abschnittweise unabhängige Kreisläufe für das Heiz- oder Kühlmedium vorhanden sind, so dass das Gehäuse abschnittweise auf verschiedenen Temperaturen gehalten werden kann. Da ferner das Gehäuse zweiteilig ist, wird die Reinigung und die Wartung des Gehäuseinneren und der Schneckengänge ermöglicht.

Mit der beschriebenen Vorrichtung kann das vorgeschlagene Verfahren im kontinuierlichen Betrieb leicht und einfach durchgeführt werden. Die Anlage kann vollautomatisiert mit Fernsteuerung versehen werden, wobei die beschriebenen Sicherheitseinrichtungen einen störungsfreien Betrieb garantieren. Der als separate Einheit ausgebildete Extruder ist auf Rädern verfahrbar, was die Wartung wesentlich erleichtert.

**Patentansprüche**

1. Verfahren zur kontinuierlichen Aufbereitung von Elektrodenmaterial, bei welchem Pech, Koksstaub und Koksschüttgut verschiedenster Körnung durch Mischen und Kneten zu einer pastösen bzw. breiigen Masse verbunden und unter Wärmezufuhr zu einem Kohlegebilde geformt werden, wobei die Misch- und Knetbehandlung und der formgebende Austrag getrennt erfolgen, dadurch gekennzeichnet, dass das Drehmoment der Misch- und Kneteinrichtung überwacht und bei einer unzulässigen Erhöhung des Solldrehmomentes die Überführung der Masse in den formgebenden Austragsraum unterbrochen wird durch Ausschleusen über eine Weiche in einem Fallschacht, der zwischen der Misch- und Kneteinrichtung und der formgebenden Austragseinrichtung angeordnet ist, und dass der formgebende Austrag des Materials durch mindestens ein Überwachungsorgan gesteuert wird.

2. Vorrichtung zur Durchführung des Verfahrens nach Anspruch 1, enthaltend eine kontinuierliche Misch- und Kneteinrichtung (1) und einen Extruder (9) mit einer Austrittsdüse (24), dadurch gekennzeichnet, dass zwischen der Misch- und Kneteinrichtung (1) und dem Extruder (9) ein Fallschacht (7) mit einer Weiche (11) angeordnet ist, die über ein erstes Überwachungsorgan (37) und über ein zweites im Fallschacht (7) angeordnetes Überwachungsorgan (17) steuerbar ist, wobei das Überwachungsorgan (17) zusätzlich die Drehzahl des Extruders (9) beeinflusst.

3. Vorrichtung nach Anspruch 2, dadurch gekennzeichnet, dass die Weiche (11) als schwenkbare Auswurfklappe ausgebildet ist, die in der Normalstellung die Verbindung einer seitlichen Auswurfmündung (10) zum Inneren des Fallschachtes (7) verschliesst und einen Teil der inneren Wandung des Fallschachtes bildet, während sie in der Schwenklage die Auswurfmündung (10) freigibt und den unteren Teil des Fallschachtes (7) verschliesst, wobei zur Verstellung der Auswurfklappe ein Verstellmotor (38) vorhanden ist, welcher über ein Steuerorgan (39) betätigbar ist, das unter Wirkung des als Niveaumessgerät ausgebildeten Überwachungsorganes (17) zur Beeinflussung des Extruderantriebes und eines an der Welle des Extruders (9) angeordneten Messgerätes (37') für die Antriebsleistung und/oder für das Drehmoment und/oder für den Druck steht.

4. Vorrichtung nach Anspruch 2, dadurch gekennzeichnet, dass sie ein in der horizontalen Mittelebene teilbares Extrudergehäuse (22) aufweist, in dem mindestens zwei Extruderwellen (29) parallel nebeneinander angeordnet sind, die mit einem Getriebe in Verbindung stehen, dessen Antriebselemente (35) in einem ausserhalb des Gehäuses (22) einseitig angesetzten Gehäuseteil (26) Aufnahme finden, wobei der Extruder (9) auf einem Chassis (19) angeordnet und verfahrbar ausgebildet ist.

5. Vorrichtung nach Anspruch 4, dadurch gekennzeichnet, dass die Extruderwellen (29), auf welche je eine Hohlwelle (32) mit Schneckengang (33) aufgesteckt und gesichert ist, nur getriebeseitig in der Stirnwand (27) des Gehäuses (22) und des aufgesetzten Gehäuseteils (26) fliegend gelagert sind.

6. Vorrichtung nach Anspruch 5, dadurch gekennzeichnet, dass das Extrudergehäuse (22) am den Antriebselementen (35) abgekehrten Ende mit einer aufklappbaren, zweiteiligen Austrittsdüse (24) versehen ist, welche Formgebungselemente (41) zur gleichzeitigen Bildung von parallelen Strängen besitzt, wobei die durch die Formgebungselemente (41) gebildeten Formkanäle (42) mit Verschliesselementen versehen sind, mittels welchen die Formkanäle einzeln oder gemeinsam verschliessbar sind.

7. Vorrichtung nach Anspruch 6, dadurch gekennzeichnet, dass die Düse (24) auf vorbestimmte Grenzwerte eingestellte Geräte für Druck- und Temperaturbestimmung und zur Überwachung des Drehmomentes aufweist, welche Geräte mit einem Motor zum Aufklappen der Düse und mit einer Alarmvorrichtung in Verbindung stehen.

8. Vorrichtung nach Anspruch 7, dadurch gekennzeichnet, dass der Düse (24) ein Kühlbad (43) nachgeschaltet ist, welches ein zweistufiges Förderband (44, 45) aufweist, wobei das erste Band (44) eine geschlossene Oberfläche aufweist, während das zweite Band (45) mit Durchbrechungen versehen ist.

9. Vorrichtung nach Anspruch 8, dadurch gekennzeichnet dass dem ersten Band (44) eine Querschneidevorrichtung (44a) zum Schneiden der endlosen Stränge zu Briketts zugeordnet ist.

**Revendications**

1. Procédé de préparation continue de matériaux d'électrode, selon lequel on combine, par mélange et malaxage, du brai, du poussier de coke et de la matière pulvérulente de coke de la granulométrie la plus diverse, pour donner une masse pâteuse et visqueuse et on la façonne, avec apport de chaleur, pour donner un produit analogue à un charbon, le traitement de mélange et de malaxage et l'extraction de façonnage se produisant séparément, caractérisé en ce qu'on surveille le couple du dispositif de mélange et malaxage et, lors d'un accroissement inadmissible du couple de consigne, on interrompt l'acheminement de la masse vers la chambre d'extraction servant au façonnage, par éjection grâce à un organe de déviation disposé dans une colonne de chute qui est interposée entre le dispositif de mélange et malaxage et le dispositif d'extraction servant au façonnage, et en ce qu'on commande cette extraction du matériau servant à son façonnage à l'aide d'au moins un organe de surveillance.

2. Dispositif pour la mise en œuvre du procédé suivant la revendication 1, comprenant un appareil continu de mélange et malaxage (1) et une extrudeuse (9) comportant une filière de sortie (24), caractérisé en ce qu'il est disposé entre cet appareil de mélange et malaxage (1) et cette extrudeuse (9) une colonne de chute (7) comportant un organe de déviation (11) qui peut être commandé par l'intermédiaire d'un premier organe de surveillance (37) et par l'intermédiaire d'un second organe de surveillance (17) disposé dans cette colonne de chute (7), cet organe de surveillance (17) agissant en outre sur la vitesse de rotation de l'extrudeuse (9).

3. Dispositif suivant la revendication 1, caractérisé en ce que l'organe de déviation (11) es constitué par un volet basculable d'évacuation qui, dans la position normale, obture la communication d'une bouche latérale d'évacuation (10) avec l'intérieur de la colonne de chute (7) et constitue une partie de la paroi intérieure de cette colonne de chute, tandis que, dans la position basculée, il libère cette bouche d'évacuation (10) et obture la partie inférieure de la colonne de chute (7), un moteur de déplacement (38) étant prévu pour déplacer ce volet d'évacuation et pouvant être mis en service par l'intermediaire d'un organe de commande (39) qui est soumis à l'influence de l'organe de surveillance (17) réalisé sous la forme d'un instrument de mesure de niveau, en vue d'agir sur l'entraînement de l'extrudeuse, et d'un instrument de mesure (37') disposé sur l'arbre de l'extrudeuse, ed d'un instrument de mesure (37') disposé sur l'arbre de l'extrudeuse (9) et prévu pour la puissance d'entraînement et/ou le couple et/ou la pression.

4. Dispositif suivant la revendication 2, caractérisé en ce qu'il comprend un corps d'extrudeuse (22) séparable suivant son plan médian horizontal et dans lequel sont disposés au moins deux arbres d'extrudeuse (29) parallèles l'un à l'autre et qui sont solidaires d'un engrenage réducteur dont les éléments d'entraînement (35) se logent dans une partie de corps (26) montée sur un côté à l'extérieur du corps (22), l'extrudeuse (9) étant montée sur un châssis (19) et agencée de façon à pouvoir de déplacer en translation sur celui-ci.

5. Dispositif suivant la revendication 4, caractérisé en ce que les arbres d'extrudeuse (29), sur chacun desquels est enfilé et fixé un arbre creux (32) comportant une vis sans fin (33), n'est monté que du côté réducteur, en porte à faux, dans la paroi frontal (27) du corps (22) et de la partie de corps rapportée (26).

6. Dispositif suivant la revendication 5, caractérisé en ce que, à son extrémité opposée aux éléments d'entraînement (35), le corps d'extrudeuse (22) est pourvu d'une filière de sortie en deux parties et rabattable (24) qui présente des éléments de forme (41) destinés à réaliser simultanément des boudins parallèles, les canaux de forme (42) formés par ces éléments de forme (41) étant pourvus d'élements d'obturation à l'aide desquels ces canaux de forme peuvent être obturés individuellement ou ensemble.

7. Dispositif suivant la revendication 6, caractérisé en ce que la filière (24) comporte des instruments de détermination de la pression et de la température et de surveillance du couple qui sont réglés sur des valeurs limites préfixées, ces instruments étant reliés à un moteur destiné à rabattre la filière et à un dispositif d'alarme.

8. Dispositif suivant la revendication 7, caractérisé en ce qu'il est prévu en aval de la filière (24) un bain de refroidissement (43) qui comporte un convoyeur à bande à deux étages (44, 45), la première bande (44) présentant une surface ininterrompue, tandis que la seconde bande est pourvue de parties découpées.

9. Dispositif suivant la revendication 8, caractérisé en ce qu'il est associé à la première bande (44) un organe de tronçonnage transversale (44a) destiné à tronçonner les boudins sans fin en briquettes.

**Claims**

1. A method for the continuous preparation of electrode material, wherein pitch, coke dust and loose coke of the most varied grain sizes are bound by mixing and kneading into a pasty or pulpy mass and formed into a carbon structure with the addition of heat, the mixing and kneading treatment and forming delivery being effected separately, characterised in that the torque of the mixing and kneading appliance is monitored, and that in the case of an inadmissible increase of the rated torque, the transfer of the mass into the forming delivery compartment is interrupted by a discharge via a deflector in a drop duct arranged between the mixing and kneading appliance and the forming delivery device, and that the forming delivery of the material is controlled by at least one monitoring device.

2. An apparatus for the implementation of the method according to claim 1, comprising a continuous mixing and kneading appliance (1) and an extruder (9) with an outlet nozzle (24), characterised in that between the mixing and kneading appliance (1) and the extruder (9) there is arranged a drop duct (7) with a deflector (11), which deflector can be controlled by a first monitoring means (37), and a second monitoring means (17) arranged in the drop duct (7), the monitoring means (17) additionally controlling the speed of rotation of the extruder (9).

3. An apparatus according to claim 2, characterised in that the deflector (11) is designed as a tiltable discharge flap which, in its normal position, obturates the communication of a lateral discharge opening (10) with the inside of the drop duct (7) and forms part of the inner wall of the drop duct, whilst in its tilted position it releases the discharge opening (10) and obturates the lower portion of the drop duct (7), a servomotor (38) being provided for the shifting of the discharge flap, which servomotor can be actuated by a control means (39) governed by the monitoring means (17), designed as a level gauge, for controlling the extruder drive and by the monitoring means (37'), arranged on the shaft of the extruder (9), for controlling the drive output and/or the torque and/or the pressure.

4. An apparatus according to claim 2, characterised in that it has an extruder casing (22) separable in the horizontal median plane, wherein there are arranged at least two extruder shafts (29) parallel to each other which are connected to a gear whose drive elements (35) are accommodated in a casing component (26) attached on one side outside the casing (22), the extruder (9) being arranged on a base frame (19) and designed for displacement.

5. An apparatus according to claim 4, characterised in that the extruder shafts (29) are only mounted on the drive side in an overhung position, in the end wall (27) of the casing (22) and of the attached casing component (26) on which shafts there is respectively fitted and secured one hollow shaft (32) with a worm (33).

6. An apparatus according to claim 5, characterised in that the extruder casing (22) is provided on its end remote from the drive elements (35) with a hinged two-piece outlet nozzle (24) tiltable upwards, having forming elements (41) for the simultaneous forming of parallel extrusions, the forming ducts (42) constituted by the forming elements (41) being provided with obturating elements, by means of which, the forming ducts can be obturated individually or together.

7. An apparatus according to claim 6, characterised in that the nozzle (24) comprises instruments set to predetermined limits, for determining the pressure and temperature, and for monitoring the torque, which instruments are coneted to a motor for tilting the nozzle up, and to an alarm.

8. An apparatus according to claim 7, characterised in that the nozzle (24) is followed by a cooling bath (43) having a two stage conveyor belt (44, 45), the first belt (44) having a solid surface, whilst the second belt (45) is provided with perforations.

9. An apparatus according to claim 8, characterised in that a transverse cutter device (44a) is allocated to the first belt (44), for cutting the continuous extrusions into briquettes.

1/3

FIG.1

2/3

FIG. 2

FIG. 3

EP 0 182 014 B1